(19) Europäisches Patentamt
European Patent Office
Office européen des brevets

(11) **EP 2 910 409 A1**

(12) **EUROPÄISCHE PATENTANMELDUNG**

(43) Veröffentlichungstag:
26.08.2015 Patentblatt 2015/35

(51) Int Cl.:
***B60M 1/26*** (2006.01)

(21) Anmeldenummer: **14196938.6**

(22) Anmeldetag: **09.12.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **19.02.2014 DE 102014202992**

(71) Anmelder: **DB Netz AG**
**60329 Frankfurt (DE)**

(72) Erfinder: **Resch, Uwe**
**64347 Griesheim (DE)**

(74) Vertreter: **Zinken-Sommer, Rainer**
**Deutsche Bahn AG**
**Patentabteilung**
**Völckerstrasse 5**
**80939 München (DE)**

(54) **Verfahren zum Nachspannen von Oberleitungsanlagen des gleisgebundenen Schienenverkehrs**

(57) Die Erfindung betrifft ein Verfahren zum Nachspannen von Oberleitungsanlagen des gleisgebundenen Schienenverkehrs, wobei an einem Oberleitungsmast oder einer Wand Befestigungs- und Spannvorrichtungen mit Seilzügen und Kulissenführungen befestigt werden.

Der Erfindung liegt die Aufgabe zugrunde, durch eine wegabhängige Spannkraft des Längskettenwerkes soll ein Wandern des Kettenwerkes in eine Richtung verhindert, ein Gleichgewichtszustand erreicht, der Konstruktionsaufwand vermindert und ein Diebstahl verhindert werden.

Dies wird erfindungsgemäß dadurch erreicht, dass ein selbstzentrierendes Nachspannsystem mit einem nichtlinearen Kraftverlauf über Federelemente, eine spezielle Excenterscheibe oder eine spezielle Kulissenführung verwendet wird, wobei das System so eingestellt wird, dass die Kraft zu- oder abnimmt, wenn sich der Mittelpunkt des zwischen zwei Oberleitungsmasten abgehangenen Tragseiles vom Nachspannsystem weg oder auf dieses zubewegt, wobei

$$F_i(x) = \sum a_j x^j + f_i$$

ist und
$F_i$ - Spannkraft am Radspanner
$f_i$ - Spannkraft pro Spannvorrichtung in Ruhelage (System steht mittig) $a_j$ - Parameter, der abhängig vom gewünschten Kraftverlauf ist
$x$ - auslenkung Oberleitung aus Ruhelage

$i$ - Nr. des Radspanners
bedeuten und $f_i = f_1 - f_2$ ist.

Figur 1

**Beschreibung**

Die Erfindung betrifft ein Verfahren zum Nachspannen von Oberleitungsanlagen des gleisgebundenen Schienenverkehrs, wobei an einem Oberleitungsmast oder einer Wand Befestigungs- und Spannvorrichtungen mit Seilzügen und Kulissenführungen befestigt werden.

Fahrdrähte und Tragseile einer Oberleitungsanlage müssen bei allen Witterungsbedingungen mit einer vorgegebenen Zugkraft gespannt werden, um einen ordnungsgemäßen Betrieb der Oberleitungsanlage zu gewährleisten. Zum Abspannen von Fahrdrähten und Tragseilen dienen unter anderem Abspannvorrichtungen mit Radspannern. Derartige Radspanner sind in regelmäßigen Abständen an Oberleitungsmasten oder anderen Stellen befestigt und Teil einer die Oberleitungsanlage haltenden Vorrichtung. Dabei weist jeder Radspanner eine Spanntrommel auf, auf die ein mit der Oberleitungsanlage verbundenes Abspannseil geführt ist. Das Spannen des Abspannseils wird oftmals über ein an der Spanntrommel an einem Gewichtsseil hängendes Nachspanngewicht durchgeführt, wobei das Nachspanngewicht so bemessen ist, dass thermisch bedingte Längenänderungen der Oberleitungsanlage über das Abspannseil und das Nachspanngewicht ausgeglichen werden und die Tragseile und Fahrdrähte der Oberleitungsanlage immer in gleicher Weise gespannt sind. Die im Abspannseil angreifende Kraft und die Gewichtskraft des Nachspanngewichts sind im Kräftegleichgewicht. Längenänderungen in der Oberleitungsanlage werden durch ein Auf- und Abrollen des Abspannseils ausgeglichen.

Ein gattungsgemäßer Radspanner für Nachspanneinrichtungen von Fahrdrähten und Tragseilen einer Kettenwerk-Oberleitungsanlage ist z. B. aus der DE 297 13 425 U1 bekannt. Bei den bekannten Nachspanneinrichtungen ist im montierten Zustand über die im Durchmesser größere Trommel ein Seil für ein Nachspanngewicht und über die im Durchmesser kleinere Trommel ein Seil für ein Abspannseil für das Kettenwerk geführt. Die Nachspanneinrichtungen halten zusammen mit den Nachspanngewichten selbsttätig und temperaturunabhängig eine gleichmäßige Zugkraft im Fahrdraht und im Tragseil aufrecht. Die Nachspanngewichte sind als Gewichtssäulen aufgebaut, wobei die Zugkraft mittels einzelner Beton- oder Metallkörper eingestellt wird.

Ein Radspanner mit zwei um eine gemeinsame Achse drehbar gelagerten Spanntrommeln unterschiedlichen Durchmessers ist auch aus der DE 199 32 195 C1 und der EP 2 554 428 A2 bekannt.

Bekannt ist es, bei Oberleitungsanlagen des Schienenverkehrs Festpunkte etwa in der Mitte der Nachspannlänge zu verwenden. Diese Festpunkte sollen die Wanderbewegungen des Längskettenwerks verhindern, sodass die temperaturbedingte Ausdehnung nur zu den Nachspanneinrichtungen möglich ist.

Die bekannten Lösungen weisen folgende Nachteile auf:

- die Spanntrommeln sind oftmals starr als Gussteile miteinander verbunden und nehmen einen großen Raum ein
- die Gewichtsführungen sind aufwendig
- das Abbremsverhalten bei Seilriss ist unzureichend
- die Festpunktkonstruktionen sind verstärkt von Diebstählen betroffen
- die Ausführungen der Festpunkte in Form von normalen Tragmasten ist nicht ausreichend
- es sind mindestens zwei Rückanker vorzusehen
- durch die schräge Krafteintragung des Festpunktankers tritt ein erhöhter Fahrdrahtverschleiß ein
- erhöhter Konstruktionsaufwand.

Der Erfindung liegt die Aufgabe zugrunde, durch eine wegabhängige Spannkraft des Längskettenwerkes soll ein Wandern des Kettenwerkes in eine Richtung verhindert, ein Gleichgewichtszustand erreicht, der Konstruktionsaufwand vermindert und ein Diebstahl verhindert werden.

Dies wird erfindungsgemäß dadurch erreicht, dass ein selbstzentrierendes Nachspannsystem mit einem nichtlinearen Kraftverlauf über Federelemente, eine spezielle Excenterscheibe oder eine spezielle Kulissenführung verwendet wird, wobei das System so eingestellt wird, dass die Kraft zu- oder abnimmt, wenn sich der Mittelpunkt des zwischen zwei Oberleitungsmasten abgehangenen Tragseiles vom Nachspannsystem weg oder auf dieses zubewegt, wobei

$$F_i(x) = \sum a_j x^j + f_i$$

ist und

$F_i$ - Spannkraft am Radspanner

$f_i$ - Spannkraft pro Spannvorrichtung in Ruhelage (System steht mittig)

$a_j$ - Parameter, der abhängig vom gewünschten Kraftverlauf ist

$x$ - auslenkung Oberleitung aus Ruhelage

$i$ - Nr. des Radspanners

bedeuten und $f_i = f_1 - f_2$ ist.

Die Spannkraft der erfindungsgemäßen Lösung darf dabei bestimmte Grenzen nicht überschreiten, damit der gespannte Fahrdraht und/oder das Seil nicht überlastet werden und reist.

Andererseits darf die Spannkurve nicht zu stark abnehmen, da dadurch der zulässige Windabtrieb, der Anhub und die Befahrungsqualität nicht mehr sichergestellt werden können.

Das sich selbstzentrierende erfindungsgemäße Nachspannsystem mit nichtlinearen Kraftverläufen ist gekennzeichnet durch eine Kraftzu- bzw. -abnahme, wenn sich der Mittelpunkt der Fahrdrahtführung zwischen zwei Stütz- bzw. Abspannpunkten von den Nachspannsystemen weg- oder auf diese zubewegt.

Dies wird entweder durch die Verwendung von speziellen Excenterscheiben erreicht, die an der Seilaufnahme am Nachspannsystem angeordnet werden oder durch herkömmliche Radspanner, wobei die Nachspanngewichte entsprechend des benötigten Kraftverlaufes mittels einer speziellen Kulissenführung geführt werden.

Dabei beträgt der Neigungswinkel in Abhängigkeit der Auslenkung z.B.:

$$\begin{cases} \alpha = 90°, & y = 0 \\ \alpha = 64° \, [sin(\alpha) = 0,1], & y = \frac{1}{2} \, y_{max} \\ \alpha = 53° \, [sin(\alpha) = 0,2], & y = y_{max} \end{cases}$$

$$\alpha(y) = 90° - 37° \cdot \frac{y}{y_{max}}$$

$\alpha$ - Neigungswinkel der Kulissenführung zur Horizontalen
ymax - maximale Auslenkung der Spanngewichte
y - Auslenkung der Spanngewichte

Die speziellen Excenterscheiben können dabei als spiralförmige Rollen ausgeführt werden, auf denen die Spannseile abrollen (Radspanner mit spiralförmigen Seilrollen). Für den Radius kann dafür folgende Funktion verwendet werden.

$$R_i = \begin{cases} R_i = R_m, & \varphi = \frac{1}{2} \, \varphi_{max} \\ R_i = 1,1 \, R_m, & \varphi = \varphi_{max} \\ R_i = 0,9 \, R_m, & \varphi = 0 \end{cases}$$

$$R(\varphi) = \frac{0,2 \cdot R_m}{\varphi_{max}} \cdot \varphi + 0,9 \cdot R_m$$

$\varphi$ - Drehwinkel der Excenterscheibe
$\varphi$ max - maximaler Drehwinkel der Excenterscheibe
Rm - mittlerer Radius der Excenterscheibe

Die Spannkraft soll sich dann variabel in einem Arbeitsbereich $F_{Nenn}$ von 0,8 bis 1,2 ... bewegen, der nichtlinear verläuft.

Die Erfindung weist folgende Vorteile auf:

• das System zentriert sich selbständig über einen nichtlinearen Kraftverlauf der Verspannungen
• der konstruktive Aufwand kann erheblich gesenkt werden
• ein Diebstahl von nicht mit Strom beaufschlagten Abschnitten der Oberleitung wird vermieden
• es sind keine Rückanker vorzusehen
• es tritt kein erhöhter Fahrdrahtverschleiß ein
• der Konstruktionsaufwand wird gesenkt

**Ausführungsbeispiel**

Anhand eines Ausführungsbeispiels soll nachfolgend die Erfindung näher erläutert werden.

Dabei zeigen:

- Figur 1 - Radspanner
- Figur 2 - Kulissenführung
- Figur 3 - Kulissenführung

Bei den üblichen Radspannern beträgt das Übersetzungsverhältnis 3:1. Die innere Seiltrommel hat einen Radius von 85mm und die äußere Trommel 255mm.
Der Fahrdraht / das Seil (3) wird an der inneren Trommel (8) befestigt. Das Abspanngewicht (2) an der äußeren Trommel (7). Bei -30°C ist die innere Trommel (8) abgewickelt ($\varphi$=0 (1)). Bei 70° (40°C plus Stromwärme) besitzt das Kettenwerk die größte Länge und die innere Trommel (8) ist vollständig aufgewickelt.
Der Wanderweg der Spanngewichte beträgt ca. 3,8 m und damit der Wanderweg des Kettenwerks ca. 1,25 m. Dies ergibt einen maximalen Drehwinkel $\varphi_{max}$ von 2,5 Umdrehungen. Die Radspanner sind für 3 Windungen konstruktiv ausgeführt.
Es ergibt sich ein Gleichgewicht der Momente:

$$F_{Absp} - Kraft\ durch\ die\ Spanngewichte$$

$$F_{Kw} - Kraft\ zum\ Kettenwerk$$

$$R_A - Radius\ der\ äußeren\ Trommel$$

$$R_I - Radius\ der\ inneren\ Trommel$$

$$Momentengleichgewicht - F_{Absp} \cdot R_A = F_{Kw} \cdot R_I$$

$$F_{Kw} = \frac{F_{Absp} \cdot R_A}{R_I}$$

Verringert sich nun der innere Radius, so nimmt die Spannkraft im Kettenwerk zu. Bei einer Vergrößerung nimmt die Kraft ab.
In der Mitte des Arbeitsbereiches soll das Übersetzungsverhältnis wie bisher 3:1 ($R_a/R_I$) betragen. Ist die innere Trommel (8) vollständig abgewickelt ($\varphi$=0), dann soll die Spannkraft z.B. 10% größer sein. Dies wird bei einem Radius von 0,9 $R_I$ erreicht. Ist die innere Trommel vollständig aufgewickelt ($\varphi$= 2,5x360°), so soll die Spannkraft 10% kleiner sein. Dies ergibt sich mit einem Radius von 1,1 $R_I$. Für den Radius der inneren Trommel ergibt sich damit folgender funktionaler Zusammenhang:

$$R_i = \begin{cases} R_i = R_m, & \varphi = \frac{1}{2}\ \varphi_{max} \\ R_i = 1{,}1\ R_m, & \varphi = \varphi_{max} \\ R_i = 0{,}9\ R_m, & \varphi = 0 \end{cases}$$

$$R(\varphi) = \frac{0{,}2 \cdot R_m}{\varphi_{max}} \cdot \varphi + 0{,}9 \cdot R_m$$

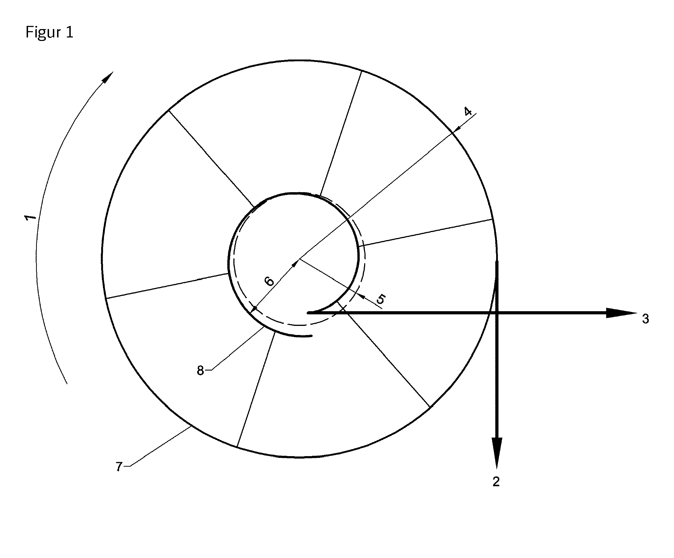

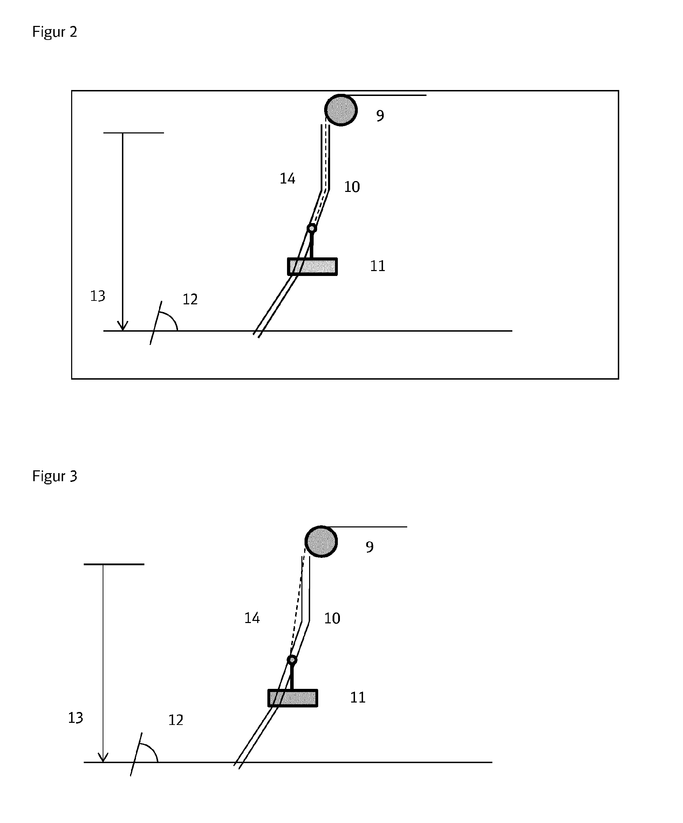

Die Figur 1 zeigt den Verlauf einer Windung.
Natürlich kann auch der Radius (4) der äußeren Seiltrommel (7) variiert werden. Die Herleitung ist dann ähnlich. Bei der Führung der Spanngewichte (11) mit einer Kulisse (10) muss die Schräge (Neigungswinkel $\alpha$ (12)) der Kulisse entsprechend gewählt werden. Die Spannkraft des Kettenwerks ergibt sich aus der Hangabtriebskraft des Gewichtes (siehe Figur 2).
Am oberen Punkt bei -30°C soll die Kraft 10% größer sein als in der Mitte. Bei der max. Auslenkung (70° (40°C Lufttemperatur plus Stromwärme)) (13) soll die Kraft 10% kleiner sein als in der Mitte. Dies bedeutet, dass sich die Spannkraft um 20% ändert. Dies ergibt für die Neigungswinkel (12)

$$F_{Kw} = F_{Absp} \cdot sin(\alpha)$$

$$\alpha = \begin{cases} \alpha = 90°, & y = 0 \\ \alpha = 64° \, [sin(\alpha) = 0,1], & y = \frac{1}{2} \, y_{max} \\ \alpha = 53° \, [sin(\alpha) = 0,2], & y = y_{max} \end{cases}$$

$$\alpha(y) = 90° - 37° \cdot \frac{y}{y_{max}}$$

Die Länge dieser Kulisse soll an dem obigen Beispiel abgeschätzt werden. Bis zu einer Höhe von 0,8m hängt das Gewicht senkrecht. Von 0,8m bis 2,3m ist die Neigung 64° und dann 53°. Dies ergibt eine Länge von 0,73m und nochmals 1,1m, so dass die gesamte Konstruktion ca. 2m Raum in Längsrichtung benötigt. Wichtig dabei ist, dass das Seil (14) auch über den Knick geführt wird, das sich sonst die Kraftaufteilung ändert (siehe Figur 3). Mit der nachfolgenden Konstruktion erhöht sich die Spannkraft durch die seitliche Auslenkung (Normalkomponente auf die Schiene wirkt im Seil).

**Liste der verwendeten Bezugszeichen**

1 - Drehwinkel $\varphi$ der Spannvorrichtung
2 - Anschluss / Verbindung zum Abspanngewicht
3 - Anschluss / Verbindung zur Oberleitung
4 - Radius der äußeren Seiltrommel
5 - mittlerer Radius der inneren Seiltrommel
6 - Radius der inneren Seiltrommel
7 - äußere Seiltrommel
8 - innere Seiltrommel
9 - Umlenkrolle und Verbindung zur Oberleitung
10 - Kulissenführung
11 - Abspanngewicht mit Führungsrolle in der Kulisse
12 - Neigungswinkel $\alpha$ zur Horizontalen
13 - max. Auslenkung des Abspanngewichtes
14 - Seil zur Kraftübertragung zur Oberleitung

**Patentansprüche**

**1.** Verfahren zum Nachspannen von Oberleitungsanlagen des gleisgebundenen Schienenverkehrs, wobei an einem Oberleitungsmast oder einer Wand Befestigungs- und Spannvorrichtungen mit Seilzügen und Kulissenführungen befestigt werden,
**gekennzeichnet dadurch, dass**
ein selbstzentrierendes Nachspannsystem mit einem nichtlinearen Kraftverlauf über Federelemente, eine spezielle Excenterscheibe oder eine spezielle Kulissenführung verwendet wird, wobei das System so eingestellt wird, dass die Kraft zu- oder abnimmt, wenn sich der Mittelpunkt des zwischen zwei Oberleitungsmasten abgehangenen Tragseiles oder Fahrdrahtes vom Nachspannsystem weg oder auf dieses zubewegt, wobei

$$F_i(x) = \sum a_j x^j + f_i$$

ist und

$F_i$ - Spannkraft am Radspanner
$f_i$ - Spannkraft pro Spannvorrichtung in Ruhelage (System steht mittig)
$a_j$ - Parameter, der abhängig vom gewünschten Kraftverlauf ist
$x$ - Auslenkung Oberleitung aus Ruhelage

i - Nr. des Radspanners

bedeuten und $f_i = f_1 - f_2$ ist.

**2.** Verfahren nach Anspruch 1, *gekennzeichnet dadurch, dass* als Excenterscheibe eine spiralförmige Rolle verwendet wird.

**3.** Verfahren nach Anspruch 1, *gekennzeichnet dadurch, dass* durch den Einsatz von Federn eine veränderliche Spannkraft realisiert wird.

**4.** Verfahren nach Anspruch 1, *gekennzeichnet dadurch, dass* das Nachspanngewicht auf einer schiefen Ebene geführt wird und eine veränderliche Spannkraft realisiert wird.

**5.** Verfahren nach Anspruch 1 bis 4 *gekennzeichnet dadurch, dass* die veränderliche Spannkraft mit passiven Elementen (keine Energieversorgung erforderlich) realisiert wird.

**6.** Verfahren nach Anspruch 1 bis 5, **gekennzeichnet dadurch, dass** das Spannseil der Kulissenführung in der Kulisse geführt wird.

Figur 1

Figur 2

Figur 3

Europäisches
Patentamt

European
Patent Office

Office européen
des brevets

**EUROPÄISCHER RECHERCHENBERICHT**

Nummer der Anmeldung

EP 14 19 6938

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/037386 A1 (PFISTERER SRL [IT]; CAPACCHIONE RENATO [IT]; MAGGI FIORINO [IT]; FEMMI) 3. April 2008 (2008-04-03) * Seite 18, Zeile 18 * ----- | 1 | INV. B60M1/26 |
| X | WO 98/21794 A1 (PFISTERER SRL [IT]; NANNINI OSVALDO [IT]) 22. Mai 1998 (1998-05-22) * Seite 16; Abbildungen 11,12 * ----- | 1-5 | |

RECHERCHIERTE SACHGEBIETE (IPC)

B60M

Der vorliegende Recherchenbericht wurde für alle Patentansprüche erstellt

| Recherchenort | Abschlußdatum der Recherche | Prüfer |
|---|---|---|
| Berlin | 9. Juli 2015 | Kyriakides, Leonidas |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
..............................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 14 19 6938

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-07-2015

| Im Recherchenbericht angeführtes Patentdokument | Datum der Veröffentlichung | Mitglied(er) der Patentfamilie | Datum der Veröffentlichung |
|---|---|---|---|
| WO 2008037386 A1 | 03-04-2008 | AT 513707 T | 15-07-2011 |
| | | CN 101522461 A | 02-09-2009 |
| | | DK 2066523 T3 | 26-09-2011 |
| | | EP 2066523 A1 | 10-06-2009 |
| | | ES 2367050 T3 | 27-10-2011 |
| | | RU 2009115867 A | 10-11-2010 |
| | | SI 2066523 T1 | 28-10-2011 |
| | | WO 2008037386 A1 | 03-04-2008 |
| WO 9821794 A1 | 22-05-1998 | AT 221267 T | 15-08-2002 |
| | | CA 2271122 A1 | 22-05-1998 |
| | | CN 1236496 A | 24-11-1999 |
| | | DE 69714282 D1 | 29-08-2002 |
| | | DE 69714282 T2 | 05-12-2002 |
| | | DK 0937325 T3 | 02-09-2002 |
| | | EP 0937325 A1 | 25-08-1999 |
| | | ES 2179380 T3 | 16-01-2003 |
| | | IT MI962324 A1 | 08-05-1998 |
| | | KR 20000053151 A | 25-08-2000 |
| | | MY 132664 A | 31-10-2007 |
| | | PT 937325 E | 29-11-2002 |
| | | US 6239362 B1 | 29-05-2001 |
| | | WO 9821794 A1 | 22-05-1998 |
| | | ZA 9709896 A | 25-05-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29713425 U1
- DE 19932195 C1
- EP 2554428 A2